# EUROPEAN PATENT APPLICATION

(11) **EP 2 977 284 A2**
(43) Date of publication of application: **27.01.2016**
(21) Application number: 15176067.5
(22) Date of filing: 09.07.2015
(51) Int. Cl.: B60W 30/14

(54) **VEHICLE TRAVELLING CONTROL DEVICE**

(30) Priority: 24.07.2014 JP 2014151140
(71) Applicant: Toyota Jidosha Kabushiki Kaisha, Toyota-shi, Aichi 471-8571 (JP)
(72) Inventor: MATSUMURA, Takeshi, Aichi, 471-8571 (JP)
(74) Representative: D Young & Co LLP

(57) **Abstract**

A vehicle travelling control device is configured to perform an acceleration and deceleration control of a vehicle in travel sections using a predetermined set speed set in advance for each travel section. The device includes an acquisition unit configured to acquire the set speed for each travel section, a reception unit that is configured to receive an input of a speed request of a driver, a speed setting unit configured to set a target speed for each travel section using the set speed for each travel section and a speed change value for the travel sections which is determined based on the input of the speed request, and a travelling control unit configured to perform the acceleration and deceleration control in the travel sections based on the target speed for each travel section.

## Description

### TECHNICAL FIELD

The present invention relates to a vehicle travelling control device.

### BACKGROUND OF THE INVENTION

In Patent Literature 1 (Japanese Unexamined Patent Application Publication No. 2010-188950), a vehicle travelling control device that performs acceleration and deceleration control of a vehicle is disclosed. The vehicle travelling control device performs the acceleration and deceleration control of the vehicle in a plurality of travel sections based on a set speed that is set for each travel section. The set speed is set in advance by a driver for each travel section.

### SUMMARY OF THE INVENTION

However, in the vehicle travelling control device disclosed in Patent Literature 1, in order to change the set speed in accordance with a preference of the driver, work of changing the set speed for each travel section is needed, and thus, it is complicated.

Various aspects of the present invention provide a vehicle travelling control device in which the preference of the driver with respect to the speed can easily be reflected in a case where the acceleration and deceleration control of the vehicle is performed using the set speed set for each travel section.

A vehicle travelling control device for a plurality of travel sections in an aspect of the present invention includes an acquisition unit configured to acquire a predetermined set speed for each travel section, a reception unit configured to receive an input of a speed request of a driver, a speed setting unit configured to set a target speed for each travel section using the predetermined set speed for each travel section acquired by the acquisition unit and a speed change value for the plurality of travel sections which is determined based on the input of the speed request received by the reception unit, and a travelling control unit configured to perform an acceleration and deceleration control in the plurality of travel sections based on the target speed for each travel section set by the speed setting unit.

In the vehicle travelling control device in the aspect of the present invention, the target speed for each travel section is set using the predetermined set speed for each travel section and the speed change value for the plurality of travel sections determined based on the input of the speed request. For this reason, since it becomes unnecessary to input the set speed that is different from each other for each travel section, in the vehicle travelling control device, it is possible to easily reflect the preference of the driver with respect to the speed.

In the aspect described above, the reception unit may receive the input of the speed request by communicating with a mobile terminal to which the speed request of the driver can be input. In this way, in the vehicle travelling control device, it is possible to improve the convenience of the driver compared to a case where the speed request is directly input to the vehicle travelling control device.

The speed change value may be a value that is added to or subtracted from the set speed or a change rate of the set speed. In this case, the vehicle travelling control device can easily calculate the target speed.

According to the various aspects of the present invention, in a case where the acceleration and deceleration control of the vehicle is performed using the set speed set for each travel section, it is possible to easily reflect the preference of the driver regarding the speed.

### BRIEF DESCRIPTION OF THE DRAWINGS

Fig. 1 is a schematic diagram of a vehicle travelling control device in an embodiment.
Fig. 2 is a flow chart that explains recording processing of an input of the speed request.
Fig. 3 is a flow chart explaining an acceleration and deceleration control by the vehicle travelling control device in Fig. 1.
Figs. 4A and 4B are diagrams explaining an adjustment of a set speed pattern.

### DESCRIPTION OF THE EMBODIMENTS

Hereinafter, embodiments of the present invention will be described with reference to the drawings. In the description below, the same reference signs will be given to the same or corresponding elements and the description thereof will not be repeated.

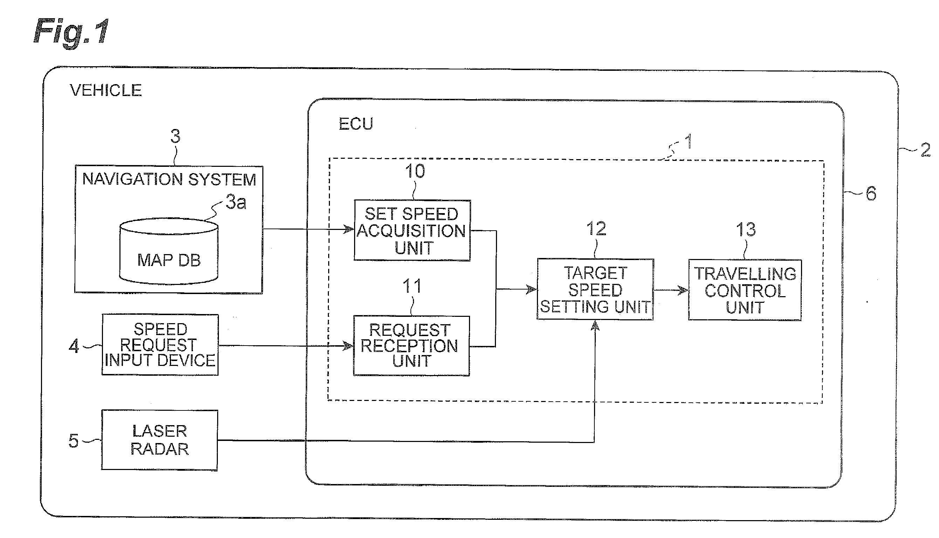

Fig. 1 is a schematic diagram of a vehicle travelling control device in an embodiment. A vehicle travelling control device 1 illustrated in Fig. 1 is a device that performs an acceleration and deceleration control of a host vehicle 2. The vehicle travelling control device 1 is, for example, mounted on the host vehicle 2. A part of functions of the vehicle travelling control device 1 may be realized by a computer in a facility such as a traffic manage center which can communicate with the host vehicle 2. The vehicle travelling control device 1 performs the acceleration and deceleration control of the host vehicle 2 for each travel section using a set speed set in advance for each travel section. The travel section is a section on which the host vehicle 2 travels and is set in advance. For example, there exists a plurality of travel sections from a current position to a destination. The plurality of travel sections is at least continuous. For example, by dividing a path from the current position to the destination under a predetermined rule, the plurality of travel sections can be set. The plurality of travel sections may be formed by dividing the path from the current position to the destination for each predetermined distance. Alternatively, the plurality of travel sections may be formed by dividing the path for each intersection (including a branch point). For example, a section from a speed limit changing point to a next speed limit changing point may be defined as the travel section. Here, the speed limit means, for example, a legal speed limit based on a traffic regulation. The speed limit changing point means a point on which the legal speed limit based on the traffic regulation is changed. The destination may be a destination set by a user using, for example, a navigation system 3 described below. Alternatively, the destination may be a point which is automatically set to the vehicle by the vehicle travelling control device 1 or other vehicle-mounted devices. For example, a point at a predetermined distance along the road from the current position may be set as the destination.

A set speed is set in advance for each travel section. "Set in advance" means that the travel section and the set speed are associated so as to be correspondent to each other up to a time before performing the acceleration and deceleration control. The set speed may be a speed which is set. For example, the set speed may be a legal speed limit, an upper limit speed at which the vehicle can pass without departing the road in the travel section (an upper limit speed in the travel section determined according to the performance of the vehicle), a speed set by the driver, or a speed set by a vehicle-mounted or an external system (for example, a traffic management system for managing the traffic situation in the area).

The function of the vehicle travelling control device 1 described above is similar to a function of, for example, so-called an ACC (adaptive cruise control). The ACC is a control of performing a constant speed control which causes the host vehicle 2 to travel at the constant set speed in a case where, for example, there is no preceding vehicle in front of the host vehicle 2, and of performing a follow-up control which adjusts the speed of the host vehicle 2 according to a distance to the preceding vehicle in a case where there exists a preceding vehicle in front of the host vehicle 2. The preceding vehicle means a vehicle traveling one vehicle prior to the host vehicle 2 on the traveling lane of the host vehicle 2. No other vehicle intervenes between the host vehicle 2 and the preceding vehicle. A case where the preceding vehicle exists in front of the host vehicle 2 means a case where, for example, there exists a preceding vehicle having a distance to the host vehicle 2 which is less than a follow-up control start threshold value set in advance. A known value can be adopted as the follow-up control start threshold value. Instead of the vehicle -to-vehicle distance from the preceding vehicle to the host vehicle 2, a TTC (Time To Collision) between the preceding vehicle and the host vehicle 2 or a THW (Time Headway) between the preceding vehicle and the host vehicle 2 may be used.

As illustrated in Fig. 1, the host vehicle 2 includes the navigation system 3, a speed request input device 4, a laser radar 5, and a ECU (electronic control unit) 6.

The navigation system 3 is a system that performs a guidance of the path to the destination to the driver. The navigation system 3 includes, for example, a GPS reception unit used for measuring a position of the host vehicle 2 and a map DB 3a in which map information is stored. The GPS reception unit measures the position (for example, latitude and longitude) of the host vehicle 2, for example, by receiving signals from three or more GPS satellites. In the map information in the map DB 3a, for example, position information of the road, type information of the road, position information of the intersection or the branch point are included. Furthermore, in the map information, the speed limit associated with the road information is included. For example, the speed limit is associated with each traveling point or each predetermined travel section. The navigation system 3 recognizes the traveling road and traveling lane on which the host vehicle 2 travels based on the position of the host vehicle 2 measured by the GPS reception unit and the map information in the map DB 3a. The navigation system 3 calculates the path from the position of the host vehicle 2 to the destination and performs a guidance of the path to the driver. Then, the navigation system 3 outputs the set speed on the path (a plurality of travel sections) from the current position to the destination to the ECU 6. In a case where the speed limit is associated with the traveling point, by making a point at which the speed limit is changed on the path from the current position to the destination to be the start point of the travel section, it is possible to derive a set speed in the travel section.

The speed request input device 4 is a device used for inputting a speed request of the driver. The speed request of the driver means a request by the driver regarding the speed. The speed request is a desire or a preference of the driver with regard to the speed such as "I want to travel slightly slowly", "I want to travel quite slowly", or "I want to travel as fast as possible". For example, a vehicle-mounted device is used as the speed request input device 4. As an example of the vehicle-mounted device, an operation switch for inputting the speed request or an operation lever can be used. Specifically, as the speed request input device 4, a switch or a lever which determines one category among categories of "hurry", "normal", "slowly", and "slightly slow" can be used. The categories may be categorized using a speed value such as "decrease by 10 km/h" or "increase by 10 km/h". The speed request input device 4 outputs the speed request to the ECU 6.

The laser radar 5 is, for example, provided on the front end of the host vehicle 2 and detects an obstacle in front of the host vehicle using a laser wave. The laser radar 5 detects the obstacle by transmitting, for example, the laser wave toward the front of the vehicle and receiving the laser wave reflected from the obstacle such as a preceding vehicle or the like. The laser radar 5 outputs a signal according to the detected obstacle to the ECU 6. Instead of the laser radar 5, a millimeter wave radar or an image sensor (a camera) may be used as the used.

The ECU 6 is an electronic control unit including a central processing unit (CPU), read only memory (ROM), random access memory (RAM), and the like. In the ECU 6, the acceleration and deceleration control is by loading the program stored in the ROM into the RAM and executing the program by the CPU. The ECU 6 may be configured with a plurality of ECUs.

The ECU 6 includes, for example, a set speed acquisition unit (an acquisition unit) 10, a request reception unit (a reception unit) 11, a target speed setting unit (a speed setting unit) 12, and a travelling control unit 13.

The set speed acquisition unit 10 acquires the set speed for each travel section. The set speed acquisition unit 10 acquires the set speed for each travel section in the path (a plurality of travel sections) from the current point to the destination from, for example, the above-described navigation system 3. The set speed acquisition unit 10 outputs the acquired set speed for each of the plurality of travel sections to the target speed setting unit 12. The set speed acquisition unit 10 may acquire the set speed for each travel section through the communication with the computer in the facility such as the traffic management center.

The request reception unit 11 receives the input of the speed request from the driver. The request reception unit 11 receives, for example, the input of the speed request from the above-described speed request input device 4. The request reception unit 11 outputs the input of the speed request, to the target speed setting unit 12.

The target speed setting unit 12 determines a speed change value in the plurality of travel sections based on the input of the speed request received by the request reception unit 11. The speed change value is a value for changing the set speed set to each of the plurality of travel sections to be uniform. For example, the speed change value may a value to be added to or subtracted from the set speed, or may be a changing rate of the set speed. The speed change value can uniformly be determined based on the input of the speed request. Specifically, if the input of the speed request is information indicating the request of "decrease the speed by 10 km/h", since the request includes the speed itself, the speed change value is "-10 km/h". On the other hand, in a case where the input of the speed request is information indicating the request of "I want to travel a little slowly", the speed change value is uniformly changed referring to a table in which the input of the speed request and the speed change value are associated with each other in advance. For example, in the table described above, in a case where the input of the speed request indicating "I want to travel a little slowly" is associated with a change rate of "-10%", the change rate of "+10%" is uniformly determined with respect to the input of the speed request of "I want to travel a little slowly".

Then, the target speed setting unit 12 sets a target speed for each travel section using the set speed for each travel section acquired by the set speed acquisition unit 10 and the speed change value. For example, the target speed setting unit 12 changes the set speed based on the speed change value with the set speed determined for each travel section as a reference, and makes the set speed after change be the target speed for acceleration and deceleration control. For example, it is assumed that the set speed in a travel section A is "60 km/h", the set speed in a travel section B is "50 km/h", the set speed in a travel section C is "80 km/h", and the speed change value is "-10 km/h". In this case, the target speed setting unit 12 sets the target speed in the travel section A to be "50 km/h" using the speed change value "-10 km/h" with the set speed "60 km/h" in the travel section A as a reference. Similarly, the target speed setting unit 12 sets the target speed in the travel section B to be "40 km/h" using the speed change value "-10 km/h" with the set speed "50 km/h" in the travel section B as a reference. Similarly, the target speed setting unit 12 sets the target speed in the travel section C to be "70 km/h" using the speed change value "-10 km/h" with the set speed "80 km/h" in the travel section C as a reference. In this way, by changing the speed of the plurality of travel sections using one speed change value, it is possible to totally change a speed pattern of the entire travel section.

Furthermore, the target speed setting unit 12 determines whether or not a preceding vehicle exists in front of the host vehicle 2 based on the recognition result of the laser radar 5, and makes the set speed after change be the target speed in a case where the preceding vehicle does not exist in front of the host vehicle 2. On the other hand, in a case where the preceding vehicle exists in front of the host vehicle 2, the speed according to the vehicle-to-vehicle distance to the preceding vehicle is made to be the target speed. The target speed setting unit 12 outputs the target speed to the travelling control unit 13.

The travelling control unit 13 performs the acceleration and deceleration control in the travel section based on the target speed for each travel section set by the target speed setting unit 12. The travelling control unit 13, for example, controls the driving of a motor or an engine mounted on the host vehicle 2, and controls the braking by adjusting the operation of a pump incorporated in a brake hydraulic circuit or the motor.

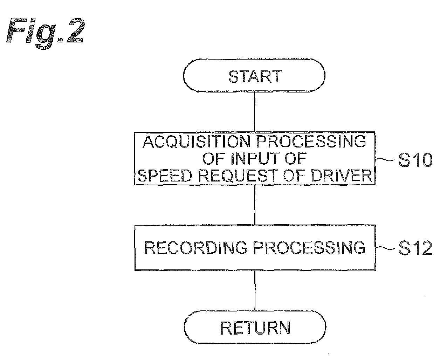

Next, an operation of the vehicle travelling control device 1 in the present embodiment will be described. Firstly, processing relating to the input of the speed request from the driver will be described. Fig. 2 is a flow chart that explains recording processing of an input of the speed request. The control processing illustrated in Fig. 2, for example, is executed at a timing when a function switch of the ACC is ON or at a timing when an operation switch of the ACC is ON. The speed request may be input prior to the start of the ACC.

As illustrated Fig. 2, firstly, the speed request input device 4 and the request reception unit 11 receive the input of the speed request of the driver (S10). For example, the driver operates the operation switch for the input of the speed request, the speed request indicating "slowly" is input, and then, the request reception unit 11 receives the input of the speed request indicating the "slowly". When the processing in S10 ends, the request reception unit 11 records the input of the speed request in the memory to which the ECU 6 can refer (S12). Then, the processing in Fig. 2 ends. In this way, the speed request is received and recorded regardless of the activation of the ACC. That is, at the time before traveling, the driver can input the speed request in advance. In addition, the speed request is received and recorded during the activation of the ACC. That is, during the travelling by the ACC, the driver can input the speed request.

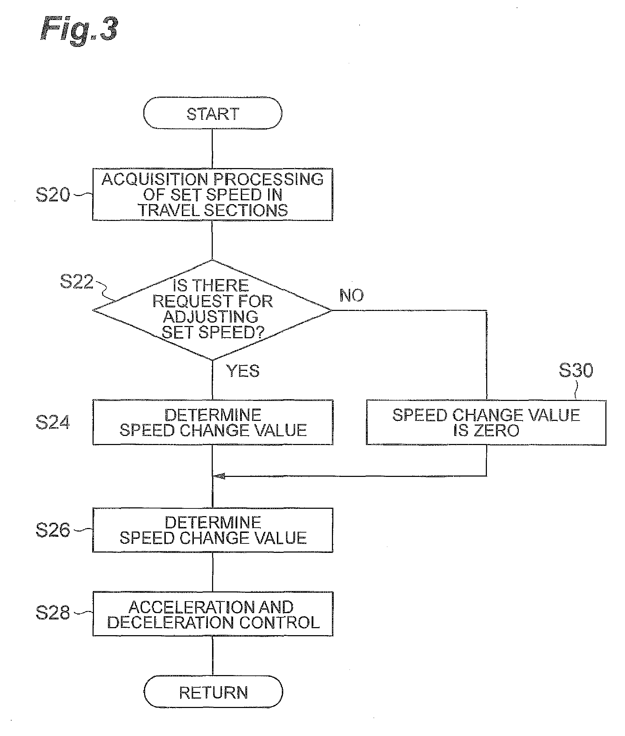

Next, the acceleration and deceleration control by the vehicle travelling control device 1 will be described. Fig. 3 is a flow chart explaining the acceleration and deceleration control by the vehicle travelling control device 1. The processing illustrated in Fig. 3 is executed at the timing when the operation switch of the ACC is ON. The control processing illustrated in Fig. 3 may be executed in a case where a distance between the vehicle and the start point of the next travel section is equal to or shorter than a preset distance.

Firstly, the set speed acquisition unit 10 acquires the set speed for each travel section in the planned travelling path (S20). The set speed acquisition unit 10 acquires the set speed for each travel section in the planned travelling path, for example, from the navigation system 3. Hereinafter, the description will be made with an example of a case where the set speed is the speed limit included in the map information. When the processing in S20 ends, the process proceeds to request determination processing (S22).

As the processing of S22, the target speed setting unit 12 determines whether or not there is a request (input of the speed request) for adjusting the set speed. The target speed setting unit 12 determines whether or not there is the input of the speed request by determining whether or not the input of the speed request is recorded by the request reception unit 11 (refer to Fig. 2). In a case where the target speed setting unit 12 determines that there is the input of the speed request, the process proceeds to processing of determining (S24) the speed change value.

As the processing of S24, the target speed setting unit 12 determines the speed change value based on the input of the speed request. Hereinafter, the description will be made with the example in which the speed change value is a value (addition or subtraction speed) to be added to or subtracted from the set speed. For example, in a case where the addition or subtraction speed is included in the input of the speed request, the target speed setting unit 12 uses the addition or subtraction speed included in the input of the speed request as the speed change value. On the other hand, in a case where the addition or subtraction speed is not included in the input of the speed request, the target speed setting unit 12 determines a value to be added to or subtracted from the set speed from the input of the speed request referring to the table in which the input of the speed request and the speed change value are associated with each other. After the determination, the process proceeds to processing (S26) of setting the target speed. When the processing in S28 ends, the control processing illustrated in Fig. 3 ends.

As the processing of S26, the target speed setting unit 12 sets the target speed for each travel section based on the speed limit for each travel section acquired in the processing of S20 and the addition or subtraction speed determined in the processing of S24. For example, the target speed setting unit 12 performs the processing of setting the target speed by adding or subtracting the addition or subtraction speed determined from the speed limit in the processing of S24 for each travel section. When the target speed for each travel section is set, the process proceeds to processing (S28) of the acceleration and deceleration control.

As the processing of S28, the travelling control unit 13 performs the acceleration and deceleration control in the travel section based on the target speed set in the processing of S26. When the processing of S28 ends, the control processing illustrated in Fig. 3 ends.

On the other hand, in the processing of S22, in a case where the target speed setting unit 12 determines that there is no input of the speed request, since there is no need to change the speed, the process proceeds to processing (S26) of setting with the speed change value as zero (S30). In this case, the target speed setting unit 12 sets the speed limit for each travel section to be the target speed. Thereafter, the acceleration and deceleration control (S28) is performed based on the target speed, and the control processing illustrated in Fig. 3 ends.

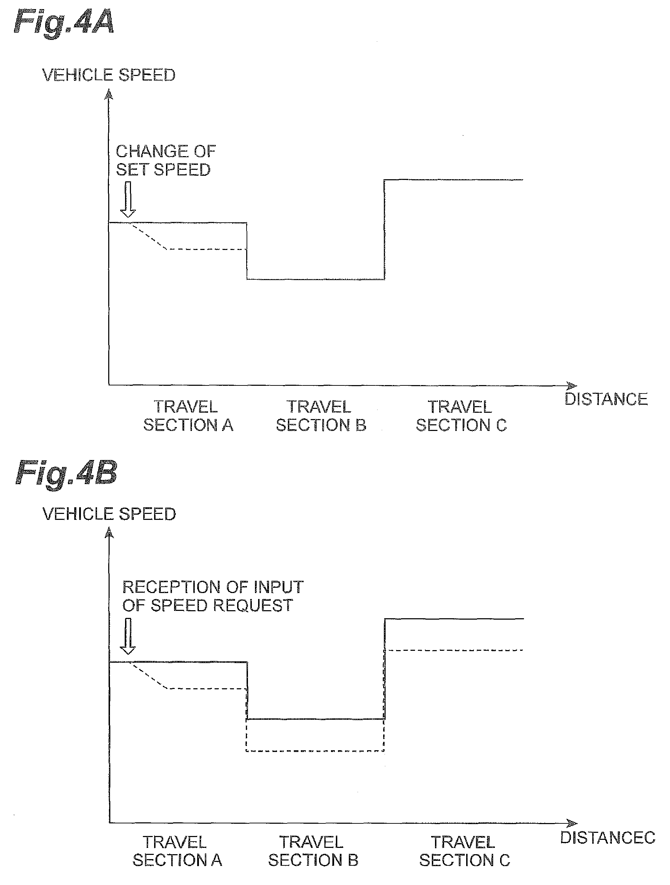

The control processing in Fig. 3 ends as described above. Next, the acting effect of the control processing illustrated in Fig. 3 will be described. Figs. 4A and 4B are diagrams explaining an adjustment of a set speed pattern. Here, set speed patterns based on the speed limit in each of the travel section A, the travel section B, and the travel section C is illustrated in solid lines. Then, the set speed patterns (target speed patterns) which are changed by a change request of the set speed (speed change request) as a trigger are illustrated in dotted lines. Fig. 4A illustrates a case where the set speed for each travel section is input and adjusted. For example, it is assumed that the driver desires to travel at a slightly low speed and inputs an absolute value of "50 km/h" in the travel section A. In this case, from the time point of inputting the request, the target speed is changed to "50 km/h" in the travel section A (dotted line in the drawing). However, when arriving at the travel section B where the speed limit is, for example, "40 km/h", the target speed is changed to "40 km/h". That is, in a case where the driver inputs the absolute value for each travel section, it is needed that the driver himself changes the set speed again in addition to the switching of the speed limit, or performs the driving with stopping the ACC.

On the other hand, Fig. 4B illustrates the case where the set speed is adjusted using the speed change value which is based on the speed request. For example, in a case where the driver desires to travel at a slightly low speed, the addition or subtraction speed of "-10 km/h" is derived as a speed change value. In this case, from the time point of inputting the request, in the travel section A, the target speed is changed to "50 km/h" (dotted line in the drawing). Then, when arriving at the travel section B where the speed limit is "40 km/h", the target speed is changed to "30 km/h". That is, the vehicle travelling control device 1 can satisfy the driver's request for travelling at the slightly low speed with the speed limit as the reference.

As described above, in the vehicle travelling control device 1, the target speed for each travel section is set using the set speed for each travel section and the speed change value in the plurality of travel sections determined based on the input of the speed request. For this reason, since it becomes unnecessary to input the set speed that is different from each other for each travel section, in the vehicle travelling control device 1, it is possible to easily reflect the preference of the driver with respect to the speed. In addition, in the vehicle travelling control device 1, it is possible to avoid the repeated changing of the speed with respect to the set speed. Furthermore, in the vehicle travelling control device 1, it is unnecessary to prepare and record a plurality of desired speed patterns.

In addition, as the speed change value, by adopting the value to be added to or subtracted from the set speed or the change rate of the set speed, the vehicle travelling control device 1 can easily calculate the target speed. Then, in a case where the change rate to the set speed is adopted, the vehicle travelling control device 1 can non-linearly change the set speed. For example, in a case where the set speed in the travel section A is "80 km/h" and the set speed in the travel section B is "90 km/h", in a case where the addition or subtraction speed is adopted as the speed change value and the addition or subtraction speed is "+ 20 km/h", the target speed in the travel section A becomes "100 km/h" and the target speed in the travel section B becomes "110 km/h". On the other hand, in a case where the change rate is adopted as the speed change value and the change rate is "+ 25%", the target speed in the travel section A is "100 km/h" and there is no change compared to the case of adopting the addition or subtraction speed. However, since the target speed in travel section B becomes "112.5 km/h", it is possible to change the speed to a speed pattern to which the desire of the driver is sufficiently reflected.

As above, the embodiment described above is an embodiment of the vehicle travelling control device in the present invention, and the vehicle travelling control device in the present invention is not limited to the content described above.

For example, as a modification of the speed request input device 4, a microphone for voice recognition may be used. In this case, the speed request of the driver is input by voice. Alternatively, speed request input device 4 may be a vehicle-mounted device which is already used for another usage relating to the speed. As the vehicle-mounted device described above, for example, an operation lever for changing the set speed of the ACC, or a brake pedal or an accelerator pedal during the travelling by the ACC can be used. Specifically, in the case of the operation lever for changing the set speed of the ACC, the speed change value according to an amount of operation of the operation lever becomes the speed request. In the case of the brake pedal or the accelerator pedal during the travelling by the ACC, it is possible to obtain the speed request according to the amount of the operation of the pedal. Furthermore, speed request input device 4 may be a vehicle-mounted device used for a usage relating to other than the speed. As the vehicle-mounted device described above, an operation switch for wiper or an operation switch for lights can be used. For example, in a case where the operation switch for wiper is in ON state, since it rains outside, it can be estimated that there is a request of the driver to slow down the speed. In addition, in a case where the operation switch for lights is in ON state, since it is night time, it can be estimated that there is a request of the driver to slow down the speed. As described above, information by which the speed request of the driver can be estimated may be used. Alternatively, the speed request input device 4 may be a device (external device) which is not mounted on the vehicle. As an example of the external device, a mobile terminal which can communicate with the host vehicle 2 may be used. The mobile terminal is configured so as to be able to input the speed request of the driver. For example, an application for the input of the speed request is installed in the mobile terminal. The driver starts the application and inputs the speed request. The mobile terminal transmits the input speed request to the request reception unit 11 of the host vehicle 2 as the input of the speed request. By using the mobile terminal, the convenience of the vehicle-side user is improved.

In addition, in the example in the above-described embodiment, the set speed acquisition unit 10 obtains the set speed from the navigation system 3. However, the set speed acquisition unit 10 may obtain the set vehicle-speed using a road-to-vehicle communication or may obtain the set vehicle-speed form another vehicle-mounted device.

In addition, in the embodiment described above, the acceleration and deceleration control of the vehicle travelling control device 1 is described as the ACC, but not limited to the ACC.

### Reference Signs List

1...vehicle travelling control device, 2...host vehicle, 3...navigation system, 4...speed request input device, 6...ecu, 10...set speed acquisition unit, 11...request reception unit, 12...target speed setting unit, 13...travelling control unit.

## Claims

1. A vehicle travelling control device for a plurality of travel sections, comprising:
an acquisition unit configured to acquire a predetermined set speed for each travel section;
a reception unit configured to receive an input of a speed request of a driver;
a speed setting unit configured to set a target speed for each travel section using the predetermined set speed for each travel section acquired by the acquisition unit and a speed change value for the plurality of travel sections which is determined based on the input of the speed request received by the reception unit; and
a travelling control unit configured to perform an acceleration and deceleration control in the plurality of travel sections based on the target speed for each travel section set by the speed setting unit.

2. The vehicle travelling control device according to Claim 1, wherein the reception unit is configured to receive the input of the speed request by communicating with a mobile terminal to which the speed request of the driver can be input.

3. The vehicle travelling control device according to Claim 1 or 2,
wherein the speed change value is a value that is added to or subtracted from the predetermined set speed, or a change rate of the predetermined set speed.
